# EUROPÄISCHE PATENTANMELDUNG

(11) **EP 4 552 731 A1**
(43) Veröffentlichungstag der Anmeldung: **14.05.2025**
(21) Anmeldenummer: 24211280.3
(22) Anmeldetag: 06.11.2024
(51) Int. Cl.: B01D 53/86, B01D 53/88, F24F 8/167, B01J 8/02, B01J 19/24, B01J 19/30, B01J 19/32, F24F 3/163

(54) **LUFTREINIGUNGSVORRICHTUNG, CONTAINMENT UND DESSEN VERWENDUNG**

(30) Priorität: 10.11.2023 EP 23209186; 22.02.2024 DE 102024105068
(71) Anmelder: SKAN Deutschland GmbH, 02827 Görlitz (DE)
(72) Erfinder: Hommes, Dr. Gregor, 47669 Wachtendonk (DE); Eggert, Benjamin, 02763 Zittau (DE); Novák, Martin, 4102 Binningen (CH)
(74) Vertreter: Mertzlufft-Paufler, Cornelius

(57) **Zusammenfassung**

Die Erfindung betrifft eine Luftreinigungsvorrichtung (1) in einem Containment, insbesondere Isolator, mit einem Katalysator (2) der auf einer Oberfläche eines porösen Trägers (3) angeordnet und in einem Durchströmungsquerschnitt (5) vorzugsweise beidseitig von einem Gitter abgedeckt ist. Die Erfindung wird zur Beseitigung von Wasserstoffperoxid verwendet. Die Erfindung betrifft weiterhin ein Containment bei dem die Luftreinigungsvorrichtung (1) in den Umwälzkreislauf des Containments eingebunden ist.

## Beschreibung

Die Erfindung betrifft eine Luftreinigungsvorrichtung für ein Containment, insbesondere ein Isolator, mit einem Katalysator, der auf einer Oberfläche eines porösen Trägers angeordnet ist.

Gemäß einem weiteren Aspekt bezieht sich die Erfindung auf ein Containment, die eine solche Luftreinigungsvorrichtung umfasst.

In einem weiteren Aspekt bezieht sich die Erfindung auf die Verwendung einer Luftreinigungsvorrichtung in einem Containment.

Zu Dekontaminationszwecken wird oft Wasserstoffperoxid (H₂O₂) und Ozon (Os) in einem Isolator verdampft und/oder vernebelt oder auf andere Weise in den Isolator eingetragen. Alternativ werden zur Dekontamination Elektronenstrahlen (e-beams) oder UV-Strahlen eingesetzt, die als Nebenprodukt Ozon entstehen lassen. Nach Beendigung des Dekontaminationsprozesses müssen diese Substanzen wieder aus Gründen des Personen- und Produktschutzes aus dem zu dekontaminierenden Raum entfernt werden. Mit Hilfe eines Katalysators sollen die Substanzen soweit abgebaut werden, dass nach der Dekontamination keine Gesundheitsgefahr für das Bedienpersonal besteht.

Aus dem Stand der Technik sind Luftreinigungsvorrichtungen zur Entgiftung von Gasen bekannt und weit verbreitet. Hierbei werden verschiedenste Katalysatoren mit meist pulver- oder kugelförmigen Katalysatormaterial in Form von Schüttgut verwendet. Derartige Katalysatoren verwenden unter anderem Manganoxid. Allerdings wird hierbei das Manganoxid meist in der Regel in granularer Form verwendet. Nachteil hierbei ist, dass durch den notwendigen Verdichtungsprozess die Homogenität und Reproduzierbarkeit der Porosität einer Schüttung nicht gewährleistet werden kann. Außerdem besteht durch die Vibrationen des Schüttbetts die Möglichkeit des nachträglichen Verdichtens, was bei vertikal durchströmten Schüttungen zu veränderter Schütthöhe und Porosität und bei horizontal durchströmten Schüttungen zusätzlich zu Lücken im oberen Bereich des Schüttbetts führen kann. Aufgrund dessen sind die Randzonen eines Festbettkatalysators großzügig abzuschirmen. Um bei gleichbleibendem Querschnitt des Festbettkatalysators die Prozesssicherheit zu gewährleisten und den verringerten effektiven Querschnitt auszugleichen, muss daher die Schüttbetthöhe der Schüttung erhöht werden. Dies führt nachteilig zu einem hohen Druckverlust bei Durchströmung des Festbettkatalysators, d.h. einer verringerten Energieeffizienz.

Der Erfindung liegt die Aufgabe zugrunde, eine Alternative zu den bisher üblichen Aufbauten zu schaffen.

Zur Lösung der genannten Aufgabe sind erfindungsgemäß die Merkmale des Anspruchs 1 vorgesehen. Insbesondere wird somit zur Lösung der genannten Aufgabe bei einer Luftreinigungsvorrichtung für ein Containment der eingangs beschriebenen Art erfindungsgemäß vorgeschlagen, dass der Katalysator in einem Durchströmungsquerschnitt vorzugsweise von wenigstens einem Gitter abgedeckt ist. Somit ist es möglich, dass ein Gas und/oder eine Flüssigkeit durch den Katalysator strömen kann. Somit ist eine Präsentationsform des Katalysators geschaffen, die im Gebrauch dauerfest ist und sich nicht verdichtet und die leicht verarbeitbar ist und beispielsweise auch in Aufstellungen verwendbar ist, in denen ein Schüttgutkatalysator gegen ein Herausrieseln gesichert werden muss. Die optionale Abdeckung mit einem Gitter hat den Vorteil eines effektiven Berührschutzes oder Abstandshalter in Bezug auf die gesundheitlich bedenklichen Substanzen des Katalysators.

Bei einer vorteilhaften Ausgestaltung kann vorgesehen sein, dass der poröse Träger durch Sintern eines mit einer keramischen Lösung getränkten vorzugsweise organischen Schaumstoffmaterials erzeugt ist. Während des Sinterns wird die Keramiklösung verfestigt und das beispielsweise organische Schaumstoffmaterial wird zersetzt beziehungsweise entschwindet oder sublimiert, so dass eine offenporige Struktur entsteht. Diese offenporige Struktur kann eine große Oberfläche für einen Katalysator bilden, die durch die Offenporigkeit gut durchströmbar ist und bleibt.

Auf diese Weise ist die Herstellung von formstabilen Keramikschaum-Festkörpern möglich, die auf die jeweiligen gewünschten geometrischen Formen anpassbar sind. Von Vorteil ist, dass der poröse Träger eine hohe Bruchfestigkeit und ein geringes Eigengewicht aufweist und somit problemlos in Isolatoren verschiedener Größe und Form eingesetzt werden kann.

Schaumstoffmaterialien bekannter Art sind beispielsweise Polyethylene(PE), Polypropylene (PP), Polytetrafluorethylen (PTFE), Polyvinylidenfluorid (PVDF). Daneben werden auch thermoplastisches Polyurethan (TPU), Ethylen-Vinylacetat (EVA), Polycarbonat (PC), Polyamid (PA) und Polyethersulfon (PES) als Basismaterialien für die Herstellung von porösen Kunststoffen verwendet.

Bei einer vorteilhaften Ausgestaltung kann vorgesehen sein, dass der poröse Träger aus einem Netz aus unregelmäßigen Kanälen besteht. Somit wird die Verweildauer des durchströmenden Mediums im Katalysator erhöht und dadurch eine höhere Abbaurate des Gases und/oder der Flüssigkeit im Katalysator erreicht.

Bei einer vorteilhaften Ausgestaltung kann vorgesehen sein, dass der poröse Träger aus einem Netz aus verzweigten Kanälen besteht. Somit wird die Verweildauer des durchströmenden Mediums im Katalysator erhöht und dadurch eine höhere Abbaurate des Gases und/oder der Flüssigkeit im Katalysator gewährleistet.

Bei einer vorteilhaften Ausgestaltung kann vorgesehen sein, dass das wenigstens eine Gitter eine Maschenweite aufweist, die einen Berührungsschutz des Katalysators realisiert. In einer bevorzugten Ausführungsform weist das Gitter eine Maschenweite idealerweise zwischen 6 mm bis 10 mm jedoch maximal 12 mm auf. Somit kann beim Austausch oder Entfernen des Katalysators ein direkter Hautkontakt mit der gesundheitsschädlichen, katalytisch aktiven Beschichtung und dessen Abrasion vermieden werden.

Bei einer vorteilhaften Ausgestaltung kann vorgesehen sein, dass das wenigstens eine Gitter eine Dicke aufweist, die einen Berührungsschutz des Katalysators realisiert. In einer bevorzugten Ausführungsform weist das Gitter eine Dicke von maximal 1,5 mm auf. Von Vorteil ist, wenn das Gitter aus vier gedruckten Schichten von jeweils 0,25 mm gefertigt ist und eine Art Distanzschicht zum Katalysator bildet. Somit kann beim Austausch oder Entfernen des Katalysators ein direkter Hautkontakt mit der gesundheitsschädlichen, katalytisch aktiven Beschichtung und dessen Abrasion vermieden werden.

Bei einer vorteilhaften Ausgestaltung kann vorgesehen sein, dass das Gitter wenigstens zweilagig ausgebildet ist. Besonders günstig ist eine dreilagige Gitterstruktur. Die Gitter könnten theoretisch auch in einer Lage gefertigt werden. Von Vorteil ist, wenn die erste Lage aus einer Gitterstruktur aus gleichseitigen Dreiecken mit einer Seitenlänge von 6-12 mm ausgestaltet ist. In einer ebenfalls denkbaren Ausführungsform kann die Gitterstruktur quadratisch oder sechseckig ausgestaltet sein. Somit dient die erste Lage aufgrund ihrer geometrischen Ausgestaltung zur Stabilisation und Festigkeit und somit als Schutz gegen Verformung und Druckeinwirkung. Von Vorteil ist, dass die anvisierte Ausgestaltung der Gitterstruktur im 3D-Druck verfahren viel einfacher zu realisieren ist.

Vorteilhaft ist, wenn die zweite und dritte Lage als sehr feine Lagen ausgebildet sind und/oder sich die zwei Gitter jeweils im 90° Winkel kreuzen, beispielsweise so dass sie ein quadratisches Netz und/oder ein Netz mit einer Kantenlänge von 1-3 mm bilden. In einer ebenfalls denkbaren Ausführungsform kann das quadratische Netz einlagig ausgebildet sein. Vorteilhaft ist, wenn die feinen Gitter eine Durchlässigkeit von 75 % und eine Abdeckung 25 % haben, denkbar wäre auch eine Gitterstruktur mit einer Abdeckung von 50% oder 90%, so dass durch diese Maschenweite ein Schutz vor Berührung gegeben, ohne dass der Gas- und/oder Flüssigkeitsstrom durch das Gitter nennenswert eingeschränkt wird. Es sind auch andere Gitter-Grundformen verwendbar, beispielsweise mit dreizähliger oder fünfzähliger Symmetrie oder unregelmäßige Grundformen.

Bei einer vorteilhaften Ausgestaltung kann vorgesehen sein, dass das wenigstens eine Gitter als Bestandteil einer Einhausung des Katalysators ausgebildet ist. Somit ist das Gehäuse nicht vollständig geschlossen, so dass durch den Katalysator ein Gas und/oder eine Flüssigkeit strömen kann. Von Vorteil ist, wenn mindestens 50 % der Einhausung als Gitter ausgebildet sind.

Bei einer vorteilhaften Ausführung kann vorgesehen sein, dass die Einhausung aus einem Gitterboden, einem Gitterdeckel und einer Wandung besteht. Somit ist es möglich den Katalysator mit Hilfe der Einhausung in den Isolator einzusetzen. Vorteilhaft ist, wenn die Einhausung wenig von der Oberfläche des Katalysators verdeckt, um hier eine gute Reiningungseffizienz zu erreichen.

Bei einer vorteilhaften Ausgestaltung kann vorgesehen sein, dass das wenigstens eine Gitter in einem additiven Verfahren hergestellt ist. Dies ermöglicht die Ausbildung sehr feiner Strukturen mit hinreichender Genauigkeit, so dass ungewollt verschlossene Gitteröffnungen vermeidbar sind. Diese könnten die Luftdurchlässigkeit ungünstig beeinflussen. Besonders feine Strukturen, insbesonder Gitterabstände, sind von Vorteil, um eine unbeabsichtigte Berührung sicher auszuschließen.

Vorteilhaft ist, wenn zuerst ein feines Gitter (dritte Lage) auf eine glatte Fläche gedruckt und auf dieses dann das nächste, beispielsweise um 90° gedrehte, feine Gitter (zweite Lage) und zum Schluss ein gröberes Gitter (erste Lage), vorzugsweise mit einer abweichenden Gitterstruktur, beispielsweise aus gleichseitigen Dreiecken, gedruckt wird. Es ist auch möglich, nur die zweite und dritte Lage oder nur die erste und zweite Lage auf diese Weise zu fertigen.

Diese Vorgehensweise bietet den Vorteil, dass sich eine glatte Außenschicht ausbildet, die zu einem als Dichtfläche und zum anderen als Referenz für einen Fräser nutzbar ist. Von Vorteil ist eine schichtweise Fertigung der Einhausung des Katalysators, beginnend mit der äußeren feinsten Schicht, an diese die weiteren Lagen und der Rahmen gedruckt werden. Hierbei wird die unterste Lage (bspw. dritte Lage) mit einem Überdruck erzeugt, so dass das austretende Material aus der Druckdüse sich an der Oberfläche etwas staut und somit die Linienstruktur etwas dicker wird. Bei den folgenden Schichten wird der Druckvorgang entsprechend angepasst, sodass sich hier keine Verdickungen in den Schnittpunkten der Gitterstruktur ergeben. Bei der Fertigung der dreieckigen Gitterlage werden die Verbindungsstege, die sich parallel zu dem einen feinen Gitter ausbilden, so positioniert, dass sich die Verbindungsstege der dreieckigen Gitterlage mit dem Gitterstege des feinen Trägers überlagern.

Anschließend wird der Gitterdeckel mit den drei Lagen gefertigt, wobei auch hier die außenseitige feine Lage zuerst gedruckt wird. In die Einhausung wird Klebematerial, beispielsweise Silikon, eingetragen und der Katalysator eingesetzt. Der Gitterdeckel wird dann, nachdem zusätzlicher Kleber in den Zwischenraum zwischen Rahmen und Katalysator und auf die Oberseite des Katalysators aufgetragen wird, eingesetzt. Mit Hilfe eines Fräsers ist es möglich nach dem Zusammenbau das überschüssige Material des Rahmens bzw. der Einhausung abzutragen oder herausgetretene Kleberreste zu entfernen, so dass auch auf der anderen Seite eine Dichtfläche möglich ist. Auf diese Weise ist zum einen eine einfache und kostengünstige Herstellung von sehr feinen Gittern und zum anderen eine sehr schnelle individuelle Größenanpassung möglich.

Das Gitter kann beispielsweise aus Kunststoffen, Kunstharzen oder Metallen bestehen, die mittels pulverbasierten Schmelzes, Aushärtung von Kunstharz oder durch Extrusion in die gewünschte Form gebracht werden.

Als additive Fertigungsverfahren sind die folgenden Verfahren denkbar Electron-Beam Melting (EBM), Fused Deposition Modeling (FDM), Multi Jet Modeling (MJM), Polyamidguss, Selective Laser Melting (SLM), Selective Laser Sintering (SLS), Space Puzzle Molding (SPM), Stereolithography (SL) und Binder Jetting (BJ). Bevorzugt ist das additive Fertigungsverfahren ein FDM-3D-Druck.

Bei einer vorteilhaften Ausgestaltung kann vorgesehen sein, dass das wenigstens eine Gitter wenigstens sich zwei kreuzende, insbesondere in separaten Lagen angeordnete, Scharen von Stegen aufweist. Somit ist es möglich eine lockere Struktur zu schaffen, die zu einem den Durchfluss des Gases und/oder der Flüssigkeit nicht begrenzt und andererseits eine direkte Berührung des Katalysators verhindert.

Bei einer vorteilhaften Ausgestaltung kann vorgesehen sein, dass das wenigstens eine Gitter wenigstens zwei Lagen unterschiedlicher Maschenweite aufweist. Die unterschiedliche Maschenweite ermöglicht neben dem mechanischen Schutz gegen Druck und Verformungen zusätzlich ein Schutz vor Berührung.

Bei einer vorteilhaften Ausgestaltung kann vorgesehen sein, dass das wenigstens eine Gitter mit einer um den Durchströmungsquerschnitt umlaufende Abdichtung verbunden ist. Somit ist ein dichter Abschluss in einer Einbausituation erreichbar, die ein unkontrolliertes Strömen von kontaminierter Luft verhindern kann. Vorteilhaft ist, wenn der Rand der Einhausung mit einer EPDM-Dichtung versehen ist.

Somit wird verhindert, dass der Gas- und/oder Flüssigkeitsstrom seitlich am Katalysator austritt und dadurch das Wasserstoffperoxid oder Ozon nicht vollumfänglich abgebaut werden kann.

Bei einer vorteilhaften Ausgestaltung kann vorgesehen sein, dass eine, beispielsweise die bereits erwähnte, umlaufende Abdichtung an einem umlaufenden, vorzugsweise zwei Gitter verbindenden Rahmen ausgebildet ist.

Beispielsweise kann das Dichtmaterial aus Ethylen-Propylen-Dien-Kautschuk (EPDM) und Polytetrafluorethylen (PTFE)bestehen.

Beispielsweise können die verbindenden Rahmen als Gehäuse ausgebildet sein. Die Wände des Rahmens orientieren sich in sinnvoller Weise an der Höhe des porösen Trägers, so dass der Rahmen als Gehäuse den porösen Träger gasdicht umschließen kann und das Gas und/oder die Flüssigkeit ausschließlich im Bereich des Gitters durch den porösen Trägers hindurch strömen und somit ausreichend abgebaut werden kann.

Bei einer vorteilhaften Ausgestaltung kann vorgesehen sein, dass die Einhausung aus wenigstens zwei Teilen zusammengesetzt ist, wobei jedes der zwei Teile jeweils ein Gitter aufweist. Somit kann die Einhausung entsprechend der Größe des Katalysators ausgestaltet werden und der Katalysator ist quasi in die Einhausung eingebettet. Somit ist eine einfache Montage möglich.

Vorteilhaft ist, wenn die Wand der Einhausung eine Dicke von 1,5 mm ± 1,0 mm aufweist.

In einer anderen bevorzugten Ausführungsform weist nur eines der wenigstens zwei Gitter (z. B. Gitterboden oder Gitterdeckel) die Wandung der Einhausung auf. Entsprechend hat das andere Bauteil nur eine flächige Form mit Höhe von bspw. maximal 1,5 mm. Die Höhe der Wand auf dem anderen Bauteil orientiert sich an der Höhe des Keramikschaum-Formkörpers, da das Gehäuse schließlich den gesamten Keramikschaum-Formkörper gasdicht umschließen soll.

Bei einer vorteilhaften Ausgestaltung kann vorgesehen sein, dass die Einhausung nach außen abgedichtet ist. Somit kann kein Gas und/oder keine Flüssigkeit während des Prozesses unkontrolliert entweichen und ein effektiver Abbau des gesundheitsschädlichen Gases und/oder der gesundheitsschädlichen Flüssigkeit wird ermöglicht.

Die Abdichtung befindet sich auf mindestens einer der Seiten des Gehäuses des Festbettkatalysators und verhindert vorteilhaft, dass es zu einem nicht ausreichenden Abbau kommt. Denn sie verhindert, dass der initiale Gas- und/oder Flüssigkeitsstrom seitlich am Katalysatorgehäuse vorbeizieht und austritt, bevor er in den Katalysator eintaucht und das Wasserstoffperoxid oder Ozon abgebaut werden kann. Vorteilhaft wird somit verhindert, dass gesundheitsschädliches Wasserstoffperoxid oder gesundheitsschädliches Ozon den Keramikschaum-Formkörper umgeht.

Beispielsweise kann die Dichtung als Flachdichtung oder Kronendichtung ausgebildet sein.

Bei einer vorteilhaften Ausgestaltung kann vorgesehen sein, dass der Katalysator zu einem Abbau von Wasserstoffperoxid ausgebildet ist.

In einer vorteilhaften Ausführung ist die gesamte Oberfläche des porösen Tägers beschichtet. Als katalytisch aktive Beschichtungsmaterialen kommen beispielsweise Metalloxide wie Mangan(IV)-oxid oder Manganoxide anderer Oxidationsstufen, sowie Edelmetalle wie beispielsweise Platin (Pt) oder Silber (Ag) in Betracht.

Bei einer vorteilhaften Ausgestaltung kann vorgesehen sein, dass der Träger aus einem keramischen Werkstoff ausgebildet ist. Somit kann ein starrer, offenporiger Festschaum-Formkörper geschaffen werden, dessen Porosität bei der Durchströmung unveränderlich bleibt. Zudem besitzt der keramische Werkstoff eine sehr geringe Wärmeleitfähigkeit, sodass infolge der exothermen katalytischen Reaktionen die Umsetzungsrate der Beschichtung verbessert wird.

Bei einer weiteren vorteilhaften Ausgestaltung kann vorgesehen sein, dass der Träger aus einem metallischen Werkstoff gebildet ist.

Alternativ oder zusätzlich sind zur Lösung der genannten Aufgabe erfindungsgemäß die Merkmale des nebengeordneten, auf ein Containment, insbesondere einen Isolator, gerichteten Anspruchs vorgesehen. Insbesondere wird somit zur Lösung der genannten Aufgabe bei einem Containment, insbesondere Isolator der eingangs beschriebenen Art erfindungsgemäß vorgeschlagen, dass die Luftreinigungsvorrichtung in einem Umwälzkreislauf des Containments angeordnet ist. Somit ist es möglich, den Reinigungsprozess innerhalb des Isolators durchzuführen, ohne dass dabei schädliche Substanzen nach außen dringen.

Der Umwälzkreislauf kann dabei beispielsweise durch eine Entnahme, Aufbereitung und Rückführung eines Stoffes, insbesondere eines Fluids, beispielsweise des oder eines Gases und/oder der oder einer Flüssigkeit, gekennzeichnet sein.

Eine bevorzugte Anwendung der Erfindung sieht vor, dass bei einem Containment, insbesondere Isolator eine erfindungsgemäße Luftreinigungsvorrichtung, zur Beseitigung von Wasserstoffperoxid verwendet wird. Somit ist es möglich, dass das zu Sterilisationszwecken verdampfte und/oder vernebelte H2O2 sowie das als Nebenprodukt entstandene und/oder eingebrachte O3 nachdem Sterilisationsprozess aus dem sterilisierten Raum wieder entfernt wird. Dadurch wird vermieden, dass das Bedienpersonal über die Abluft oder bei Eintritt in den sterilisierten Raum mit gesundheitsgefährdenden Gasen oder Flüssigkeiten in Kontakt kommt.

Die Erfindung wird nun anhand eines Ausführungsbeispiels näher beschrieben, ist jedoch nicht auf das Ausführungsbeispiel beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt:
- Fig. 1: eine dreidimensionale Gesamtansicht,
- Fig. 2: eine Detailansicht der Front,
- Fig. 3: eine Explosionszeichnung,
- Fig. 4: ein Detail des Gitters mit gleichseitigen Dreiecken
- Fig. 5: ein weiteres Detail des Gitters mit Querverstrebungen
- Fig. 6: ein weiteres Detail des Gitters mit Längsverstrebungen
- Fig. 7: ein Detail eines Längsschnitts mit dem Rahmen,
- Fig. 8: ein weiteres Detail eines Längsschnitts mit dem Frontgitter,
- Fig. 9: ein Detail eines Querschnitts auf Höhe des hintersten Gitters,
- Fig. 10: ein Detail eines Querschnitts auf Höhe des davor angeordneten Gitters,
- Fig. 11: ein Detail eines Querschnitts auf Höhe des davor angeordneten Gitters,
- Fig. 12: ein Detail eines Querschnitts auf Höhe des Trägerkörpers,
- Fig. 13: ein Detail eines Querschnitts auf Höhe des davor angeordneten Gitters,
- Fig. 14: ein Detail eines Querschnitts auf Höhe des davor angeordneten Gitters,
- Fig. 15: ein Detail eines Querschnitts auf Höhe des davor angeordneten, abschließenden Gitters und
- Fig. 16: ein Frontgitter eines weiteren Ausführungsbeispiels.

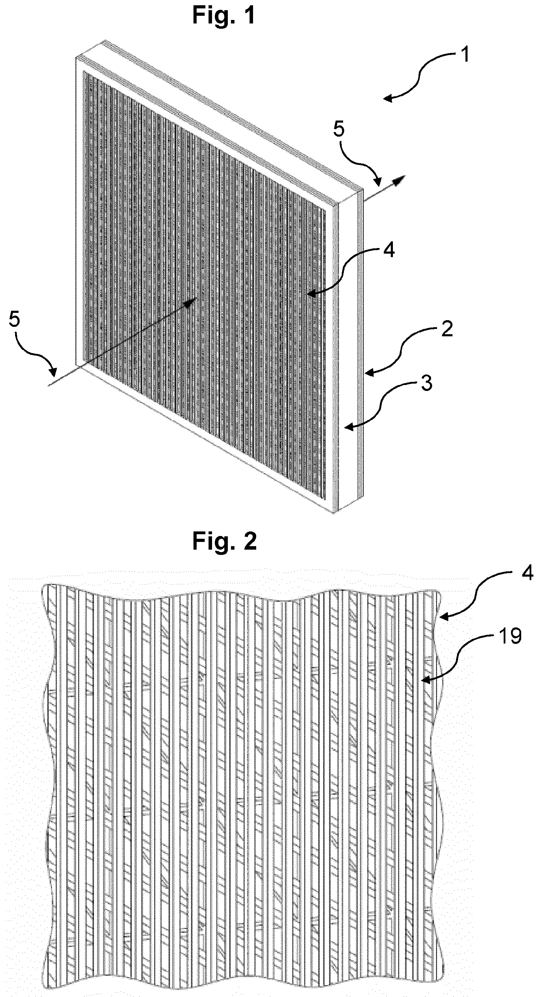

Die Figur 1 zeigt eine dreidimensionale Gesamtansicht der erfindungsgemäßen Luftreinigungsvorrichtung 1.

Die Luftreinigungsvorrichtung 1 kann beispielsweise in einem Umwälzkreislauf eines Containments angeordnet sein und beispielsweise zur Beseitigung von Wasserstoffperoxid aus dem Containment verwendet werden.

Die Luftreinigungsvorrichtung 1 besteht aus einem Katalysator 2, der in seinem Durchströmungsquerschnitt 5 beidseitig von einem Gitter 4 abgedeckt wird.

Der Katalysator 2 besteht aus einem porösen Träger 3, der mit einer katalytisch aktiven Beschichtung versehen ist. Der poröse Träger 3 kann beispielsweise aus einem keramischen und/oder metallischen Werkstoff hergestellt sein.

Als katalytische Beschichtung kann beispielsweise der poröse Träger 3 mit Manganoxid beschichtet sein.

In einer nicht dargestellten Ausführung wird der poröse Träger 3 durch Sintern eines mit keramischer Lösung getränkten organischem Schaumstoffmaterials hergestellt. Während des Sinterverfahrens verfestigt sich die keramische Lösung und das organische Schaumstoffmaterial zersetzt sich und entschwindet. Dadurch entsteht ein poröser Träger 3 mit einem Netz aus unregelmäßigen und/oder verzweigten Kanälen.

Bei einem weiteren Ausführungsbeispiel ist der poröse Träger 3 als ein Metallschaum hergestellt.

Wie in den Figuren 2 bis 16 dargestellt, ist der Katalysator 2 mit einem Gitter 4 versehen.

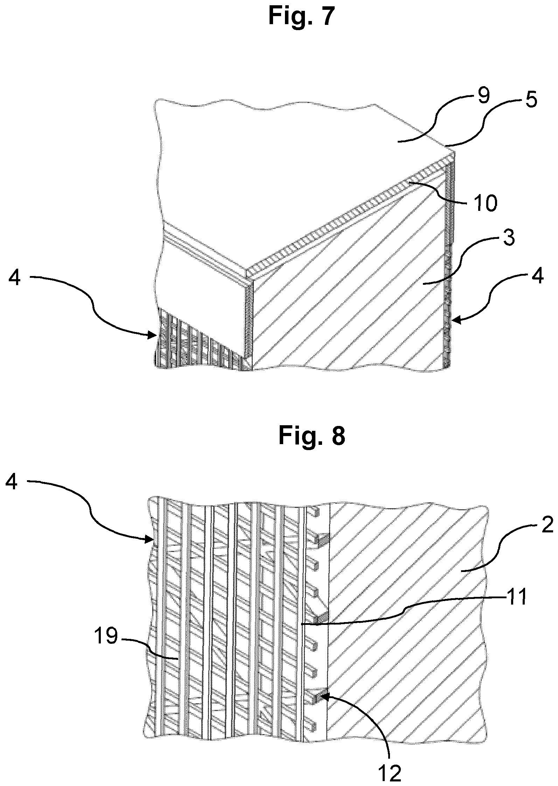

Die Herstellung des Gitters 4 erfolgt beispielsweise mittels eines additiven Verfahrens. Wie in Fig. 8 dargestellt kann idealerweise vorgesehen sein, dass das Gitter 4 aus wenigstens zwei Lagen besteht. Die Maschenweite 12 und/oder Dicke 13 des Gitters 4 ist/sind beispielsweise so ausgebildet, dass es bei Berührung zu keinem direkten Kontakt mit dem Katalysator 2 und somit auch nicht mit den gesundheitsgefährlichen Substanzen kommt.

Das Gitter 4 ist Bestandteil einer Einhausung 6 des Katalysators 2. Die Einhausung 6 kann beispielsweise aus einem Gitterboden 7, Gitterdeckel 8 und einer Wandung 9 bestehen.

In Figur 2 ist eine Detailansicht der Front mit der Gitterstruktur und den unterschiedlichen Lagen des Gitters 4 zu sehen. Beispielsweise kann das Gitter 4 aus verschiedenen Lagen unterschiedlicher Maschenweite ausgebildet sein.

Das Ausführungsbeispiel der Figur 2 zeigt ein Gitter 4 von sich kreuzenden in separaten Lagen angeordneten Scharen von Stegen. In dem Beispiel sind drei sich kreuzende Lagen angeordnet, es ist aber auch denkbar, dass nur eine oder zwei Lagen vorhanden sind.

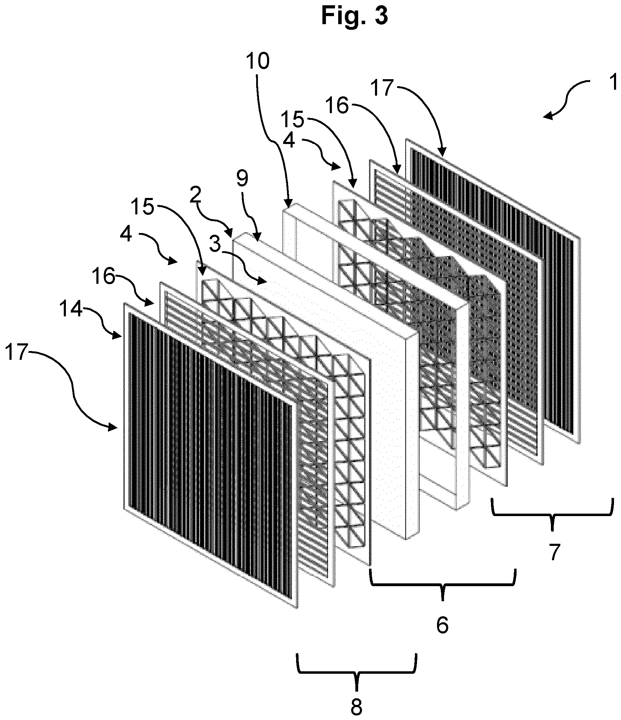

In Figur 3 ist eine Explosionsansicht des Luftreinigungsvorrichtung 1 dargestellt. Das Ausführungsbeispiel aus Fig. 3 besteht aus einem dreilagigen Gitterboden 7, einem Katalysator 2, einem Gitterdeckel 8 und einer Wandung 9. Der Gitterboden 7, die Wandung 9 sowie der Gitterdeckel 8 bilden eine Art Rahmen 11 für den Katalysator 2. Der Gitterboden 7 als auch der Gitterdeckel 8 bestehen aus drei Lagen mit unterschiedlichen Gitterstrukturen.

Die Wandung 9 kann beispielsweise als Rahmen 11 ausgebildet sein, in der der Katalysator 2 stoffschlüssig eingefügt werden kann und mit dem Gitterboden 7 und Gitterdeckel 8 verbunden ist. Beispielsweise kann in dem Rahmen 11 eine Abdichtung 10 ausgebildet sein. Die Abdichtung 10 soll ein Entweichen gesundheitsgefährdenden Gases und /oder gesundheitsgefährdender Flüssigkeit verhindern.

In einem nicht dargestellten Ausführungsbeispiel kann an der Außenseite des Rahmen 11 eine Abdichtung 10 ausgebildet sein, so dass kein gesundheitsgefährdendes Gas und oder Flüssigkeit außerhalb des Katalysators 2 entweichen kann.

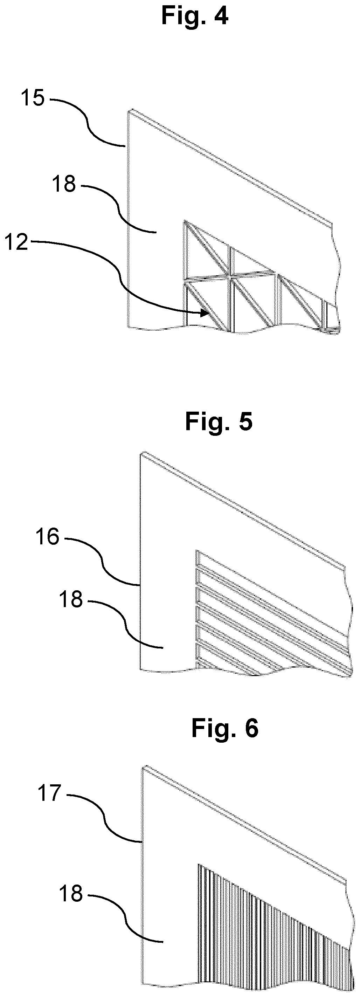

In Fig. 4 zeigt eine Detailansicht des Gitters 15 welches sich direkt am Katalysator 2 befindet. Das Gitter 15 ist mit einer Gitterstruktur aus gleichschenkeligen Dreiecken ausgebildet.

In Fig. 5 ist eine Detailansicht des Gitters 16 mit einer Gitterstruktur, die eine Schar von Stegen aufweist, dargestellt. Die Stege sind in horizontaler Richtung ausgebildet.

Eine Detailansicht des Gitters 17 ist in Fig. 6 dargestellt. Das Gitter 17 weist ebenso eine Schar von Stegen auf. Hierbei sind die Stege allerdings in vertikaler Richtung ausgerichtet. Die Gitterstruktur der Gitter 15 bis 17 bilden einen Berührungsschutz 14, umso den direkten Kontakt mit dem Katalysator 2 zu vermeiden.

Durch Vergleich der Fig. 4 mit der Fig. 5 ist ersichtlich, dass die Stege des Gitters 16 die Stege des Gitters 15 allenfalls kreuzen, so dass nur punktförmige Berührungen zwischen den Gittern 15, 16 vorhanden sind.

Bei einem weiteren Ausführungsbeispiel sind die Gitter 16 (Fig. 5) und 17 (Fig. 6) miteinander vertauscht, so dass einzelne der Stege des Gitters 16 mit bestimmten (z.B. den geradlinig von einem Rand zum gegenüberliegenden Rand durchlaufenden) Stegen zu Deckung gebracht sind. Dies kann zur Stabilisierung des Gitters 17 auf dem Gitter 15 genutzt werden.

Fig. 7 zeigt ein weiteres Ausführungsbeispiel der Luftreinigungsvorrichtung 1. Der poröse Träger 3 ist in der Mitte eingebettet und ist jeweils an der Ober- und Unterseite von einem Gitter 4 bedeckt. An den Seitenrändern ist der Katalysator 2 mit einer geschlossenen Wandung 9 versehen, so dass das Gas und/oder Flüssigkeit nur im Durchströmungsquerschnitt 5 durchfließen kann. Eine Abdichtung 10 verschließt gasdicht, die Lücken zwischen den porösen Träger 3, der Wandung 9 sowie dem Gitterboden 7 und Gitterdeckel 8. Dadurch wird erreicht, dass das Gas und /oder Flüssigkeit gezielt durch den Katalysator 2 geleitet wird und kein gesundheitsgefährdendes Gas und/oder Flüssigkeit seitlich der Einhausung 6 entweichen kann.

Figur 8 zeigt ein weiteres Detail eines Längsschnitts mit dem Frontgitter. Auf dem Katalysator 2, der beispielsweise zum Abbau von Wasserstoffperoxid ausgebildet ist, liegt ein dreilagiges Gitter 4 auf. Das unterste, auf dem Katalysator 2 liegende Gitter 15 unterscheidet sich sowohl in der Maschenweite 12 als auch in der Dicke 13 von den weiteren Gittern. Bei dem mittleren 16 und obersten Gitter 17 sind die Stege in einem 90° Winkel zueinander angeordnet, so dass sie eine feinmaschige Gitterstruktur bilden.

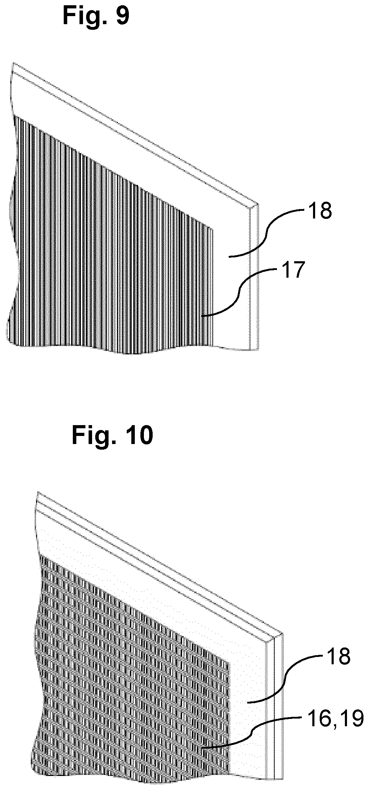

In den nachfolgenden Figuren 9 bis 15 ist in beispielhafter Form der Aufbau einer Luftreinigungsvorrichtung 1 dargestellt. Die einzelnen Figuren zeigen nachfolgend jeweils Detailansichten des Aufbaus des Ausführungsbeispiels. In einer beispielhaften Ausgestaltung weist die Einhausung 6 einen Gitterboden 7, einen Gitterdeckel 8 und eine Wandung 9 auf.

Figur 9 des Ausführungsbeispiels ist ein Detail eines Querschnitts auf Höhe des hintersten Gitters 17 abgebildet. Das Gitter 4 kann beispielsweise als Teil der Einhausung 6 des Katalysators 2 ausgebildet sein. Das Gitter 17 weist eine gleichmäßige angeordnete Anzahl von längsverlaufenden Stegen 17 sowie eine Umrandung 18 auf.

In Figur 10 des Ausführungsbeispiels ist ein Detail auf Höhe des davor angeordneten Gitters 16 abgebildet. Das Gitter 16 ist ebenso mit Stegen und einer Umrandung 18 ausgebildet. Allerdings sind die Stege in horizontaler Richtung angeordnet, so dass sich die Stege des Gitters 17 und des davor angeordneten Gitters 16 in einem 90° Winkel kreuzen und ein quadratisches Netz 19 bilden.

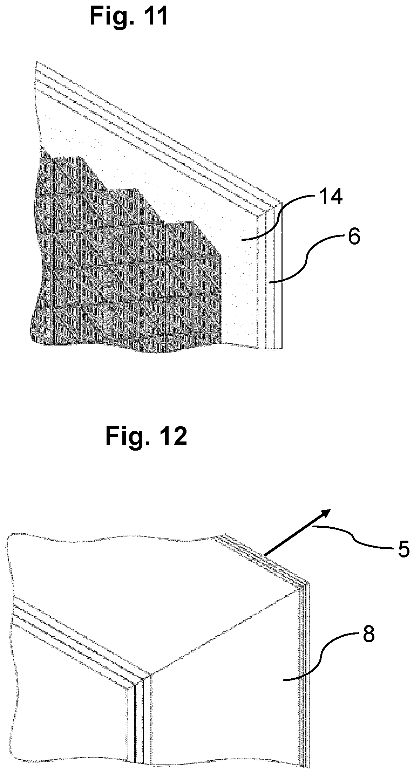

In Figur 11 des Ausführungsbeispiels ist ein Detail auf Höhe des davor angeordneten Gitters abgebildet. Das Gitter in Figur 11 bildet zusammen mit den Gittern der Figuren 9 und 10 den Gitterboden 7. Das davor angeordnete Gitter 4 des Ausführungsbeispiels in Figur 7 weist eine Struktur aus verschiedenen gleichschenkeligen Dreiecken auf. Im Unterschied zu den dargestellten Gittern aus Figur 8 und 9 ist das Gitter 4 aus der Figur 11 wesentlich grobmaschiger und dient vorzugsweise zur Stabilisierung.

In Figur 12 des Ausführungsbeispiels ist ein weiteres Detail auf Höhe des Trägerkörpers abgebildet. Das Ausführungsbeispiel zeigt die geschlossene Wandung 9 der Einhausung 6.

In einem weiteren nicht dargestellten Ausführungsbeispiel kann die Einhausung 6 zweiteilig ausgestaltet sein und jedes Teil ein Gitter 4 aufweisen. Eine denkbare Ausgestaltung kann auch sein, dass eines der Gitterboden 7 und/oder der Gitterdeckel 8 mit der Wandung 9 verbunden ist und/oder der Gitterboden 7 und/oder der Gitterdeckel 8 separat ausgestaltet ist.

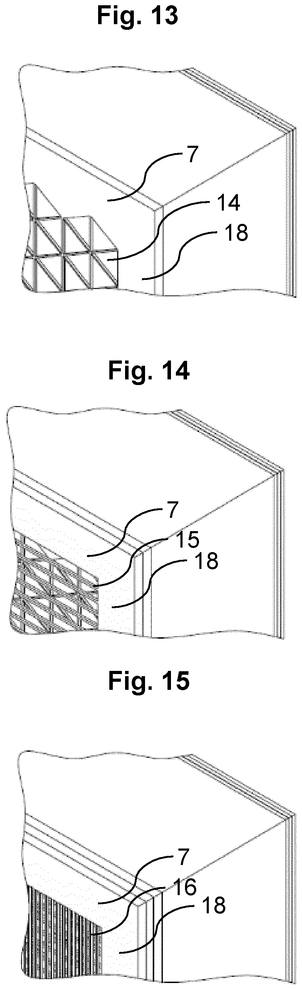

Die Figuren 13 bis 15 stellen den Gitterdeckel 8 dar.

In Figur 13 des Ausführungsbeispiels ist ein Detail eines Querschnittes auf Höhe des davor angeordneten Gitters abgebildet. Das zuvor angeordnete Gitter 15 ist beispielsweise ein Teil des Gitterdeckels 8 und weist ebenso die Struktur von gleichschenkeligen Dreiecken auf.

In Figur 14 des Ausführungsbeispiels ist ein Detail eines Querschnittes auf Höhe des davor angeordneten Gitters abgebildet. Das Gitter 16 weist gleichmäßig angeordnete Stege in horizontaler Richtung sowie eine Umrandung 18 auf.

In Figur 15 des Ausführungsbeispiels ist ein Detail eines Querschnitts auf Höhe des davor angeordneten, abschließenden Gitters abgebildet. Das Gitter 17 des Gitterdeckels ist baugleich zu dem Gitter 17 aus Figur 9 und weist eine gleichmäßige angeordnete Anzahl von vertikalen Streben sowie eine Umrandung 18 auf.

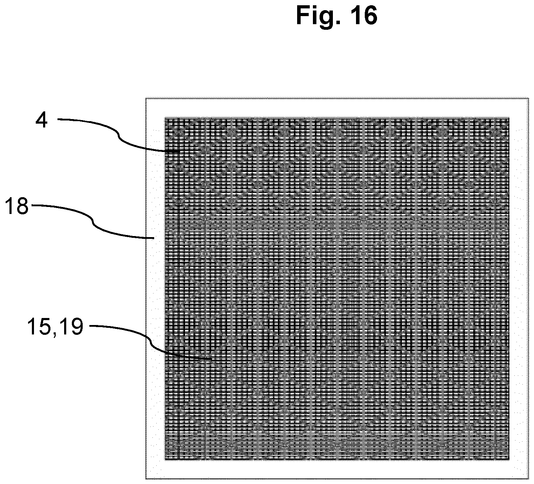

In Figur 16 ist ein Gitter 4 eines weiteren Ausführungsbeispiels in einer Draufsicht abgebildet. Das Gitter 4 weist zu einem eine Gitterstruktur aus gleichschenkligen Dreiecke 15 sowie eine Gitterstruktur, aus einem feinmaschigen quadratisches Netz 19, auf. Ebenso ist das Gitter 4 mit einer Umrandung 18 versehen.

Die Erfindung betrifft eine Luftreinigungsvorrichtung 1 in einem Containment, insbesondere Isolator, mit einem Katalysator 2 der auf einer Oberfläche eines porösen Trägers 3 angeordnet und in einem Durchströmungsquerschnitt 5 vorzugsweise beidseitig von einem Gitter 4 abgedeckt ist. Die Erfindung wird zur Beseitigung von Wasserstoffperoxid verwendet. Die Erfindung betrifft weiterhin ein Containment bei dem die Luftreinigungsvorrichtung 1 in den Umwälzkreislauf des Containments eingebunden ist.

### Bezugszeichenliste

- 1: Luftreinigungsvorrichtung
- 2: Katalysator
- 3: poröser Träger
- 4: Gitter
- 5: Durchströmungsquerschnitt
- 6: Einhausung
- 7: Gitterboden
- 8: Gitterdeckel
- 9: Wandung
- 10: Abdichtung
- 11: Rahmen
- 12: Maschenweite
- 13: Dicke
- 14: Berührungsschutz
- 15: Gitter mit gleichschenkligen Dreiecken
- 16: Gitter mit horizontalen Stege
- 17: Gitter mit vertikalen Stege
- 18: Umrandung
- 19: Quadratische Netz

## Patentansprüche

1. Luftreinigungsvorrichtung (1) für ein Containment, insbesondere einen Isolator, mit einem Katalysator (2), der auf einer Oberfläche eines porösen Trägers (3) angeordnet ist, **dadurch gekennzeichnet, dass** der Katalysator (2) in einem Durchströmungsquerschnitt (5) vorzugsweise beidseitig von wenigstens einem Gitter (4) abgedeckt ist.

2. Luftreinigungsvorrichtung (1) nach Anspruch 1, **dadurch gekennzeichnet, dass** der poröse Träger (3) durch Sintern eines mit einer keramischen Lösung getränkten vorzugsweise organischen Schaumstoffmaterials erzeugt ist.

3. Luftreinigungsvorrichtung (1) nach einem der vorangegangenen Ansprüche, **dadurch gekennzeichnet, dass** der poröse Träger (3) ein Netz von unregelmäßigen und/oder verzweigten Kanälen ausbildet.

4. Luftreinigungsvorrichtung (1) nach einem der vorangehenden Ansprüche, **dadurch gekennzeichnet, dass** das wenigstens eine Gitter (4) eine Maschenweite (12) und/oder eine Dicke (13) aufweist, die einen Berührschutz (14) des Katalysators realisiert.

5. Luftreinigungsvorrichtung (1) nach einem der vorangehenden Ansprüche, **dadurch gekennzeichnet, dass** das Gitter (4) wenigstens zweilagig ausgebildet ist.

6. Luftreinigungsvorrichtung (1) nach einem der vorangehenden Ansprüche, **dadurch gekennzeichnet, dass** das wenigstens eine Gitter (4) als Bestandteil einer Einhausung (6) des Katalysators (2) ausgebildet ist.

7. Luftreinigungsvorrichtung (1) nach einem der vorangehenden Ansprüche, **dadurch gekennzeichnet, dass** die Einhausung (6) aus einem Gitterboden (7), einem Gitterdeckel (8) und einer Wandung (9) besteht.

8. Luftreinigungsvorrichtung (1) nach einem der vorangehenden Ansprüche, **dadurch gekennzeichnet, dass** das wenigstens eine Gitter (4) in einem additiven Verfahren hergestellt ist.

9. Luftreinigungsvorrichtung (1) nach einem der vorangehenden Ansprüche, **dadurch gekennzeichnet, dass** das wenigstens eine Gitter (4) wenigstens zwei sich kreuzende, insbesondere in separaten Lagen angeordnete, Scharen von Stegen aufweist.

10. Luftreinigungsvorrichtung (1) nach einem der vorangehenden Ansprüche, **dadurch gekennzeichnet, dass** das wenigstens eine Gitter (4) wenigstens zwei Lagen unterschiedlicher Maschenweite (12) aufweist.

11. Luftreinigungsvorrichtung (1) nach einem der vorangehenden Ansprüche, **dadurch gekennzeichnet, dass** das wenigstens eine Gitter (4) mit einer um den Durchströmungsquerschnitt (5) umlaufenden Abdichtung (10) verbunden ist.

12. Luftreinigungsvorrichtung (1) nach einem der vorangehenden Ansprüche, **dadurch gekennzeichnet, dass** die oder eine umlaufende Abdichtung (10) an einem umlaufenden, vorzugsweise zwei Gitter (4) verbindenden Rahmen (11) ausgebildet ist.

13. Luftreinigungsvorrichtung (1) nach einem der vorangehenden Ansprüche, **dadurch gekennzeichnet, dass** die Einhausung (6) aus wenigstens zwei Teilen zusammengesetzt ist, insbesondere wobei jedes der zwei Teile jeweils ein Gitter (4) aufweist.

14. Luftreinigungsvorrichtung (1) nach einem der vorangehenden Ansprüche **dadurch gekennzeichnet, dass** nur eines der wenigstens zwei Gitter (4) die Wandung (9) der Einhausung (6) aufweist.

15. Luftreinigungsvorrichtung (1) nach einem der vorangehenden Ansprüche, **dadurch gekennzeichnet, dass** die Einhausung (6) nach außen abgedichtet ist.

16. Luftreinigungsvorrichtung (1) nach einem der vorangehenden Ansprüche, **dadurch gekennzeichnet, dass** der Katalysator (2) zu einem Abbau von Wasserstoffperoxid ausgebildet ist.

17. Luftreinigungsvorrichtung (1) nach einem der vorangehenden Ansprüche, **dadurch gekennzeichnet, dass** der Träger (3) aus einem keramischen und/oder einem metallischen Werkstoff gebildet ist.

18. Containment, insbesondere Isolator, mit einer Luftreinigungsvorrichtung (1) nach einem der vorangehenden Ansprüche, wobei die Luftreinigungsvorrichtung (1) in einem Umwälzkreislauf des Containments angeordnet ist.

19. Verwendung einer Luftreinigungsvorrichtung (1) nach einem der Ansprüche 1 bis 17 bei einem Containment, insbesondere Isolator, insbesondere nach Anspruch 18, zur Beseitigung von Wasserstoffperoxid aus dem Containment.
